# EUROPÄISCHE PATENTANMELDUNG

(11) **EP 1 731 797 A2**
(43) Veröffentlichungstag der Anmeldung: **13.12.2006**
(21) Anmeldenummer: 06011482.4
(22) Anmeldetag: 02.06.2006
(51) Int. Cl.: F16H 37/12, F16H 1/16, F16H 25/20

(54) **Baugruppe mit einem Motor und einem mechanischem Getriebe zur Umformung der Motor-Drehbewegung in eine translatorische Bewegung**

(30) Priorität: 07.06.2005 DE 20508815 U
(71) Anmelder: Urban, Volker, 71032 Böblingen (DE)
(72) Erfinder: Urban, Volker, 71032 Böblingen (DE)
(74) Vertreter: Blutke, Klaus Wilhelm

(57) **Zusammenfassung**

Das Getriebe umfaßt zwei hintereinandergeschaltete SchneckenGetriebe (I und II) mit jeweils einer Schnecke (I-S, II-S) und jeweils einem Schneckenrad (I-R, II-R).

Das Schneckenrad (II-R) des zweiten Schneckengetriebes (II) ist mit einer gewindegetriebenen Anordnung verbunden zur Umformung der Drehbewegung dieses Schneckenrades (II-R) in eine translatorische Bewegung (T) eines Stell-Gliedes (2) in Richtung der Schneckenrad(II-R)-Achse.

Bei einer besonders platzsparenden Baugruppe ist die Schnecke (I-S) des ersten Schneckengetriebes (I) auf der Achse (A) des Motors (1) und die Schnecke (II-S) des zweiten Schneckengetriebes (II) auf der Achse des Schneckenrades (1-R) des ersten Schneckengetriebes (I) angeordnet, wobei das Stellglied (2) dicht neben dem Motor (1) angeordnet ist und der Bewegungsrichtungsvektor des Stellgliedes (2) und die Motorachse (A) parallel zueinander verlaufen.

## Beschreibung

Die Erfindung betrifft eine Baugruppe mit einem Motor für Start/Stop- und Vorwärts/Rückwärtslauf-Betrieb und mit einem motorgetriebenen mechanischem Getriebe zur Umformung der Motor-Drehbewegung in eine translatorische Bewegung.
Derartige Baugruppen kommen vielfach für translatorisch bewegte Schalt- oder Steuerelemente zum Einsatz, insbesondere dann, wenn ein Elektromotor ein Stellglied hin- und herbewegen soll, welches die mechanische Verstellung einer Einrichtung oder eine elektrische Kontaktgabe für eine Schaltung bewirken soll.
So werden z.B. solche Baugruppen auch für des Weichenstellen elektrischer Modelleisenbahnen eingesetzt. Sie sind direkt an bzw. unter der Weiche angeordnet, wobei ein "Steuerstift" die Weiche wahlweise in eine von zwei Richtungen stellt. Der Steuerstift führt dabei eine Hin- und Herbewegung aus, welche von der Drehung eines Elektromotors über ein Getriebe abgeleitet wird.

Verschiedene Baugruppen dieser Art sind nach dem Stand der Technik bekannt; sie weisen wie nachstehend beschrieben und dargestellt u.a. den Nachteil relativ großer Abmessungen auf. Durch ihre relativ großen Abmessungen bedingt, sind sie in übliche Tragplatten (10-12 mm stark) für den Unterbau von Modelleisenbahnanlagen nicht integrierbar.

Desweiteren ist ihr Untersetzungsverhältnis in Relation zur Anzahl der verwendeten Getriebe-Elemente nicht sehr hoch.

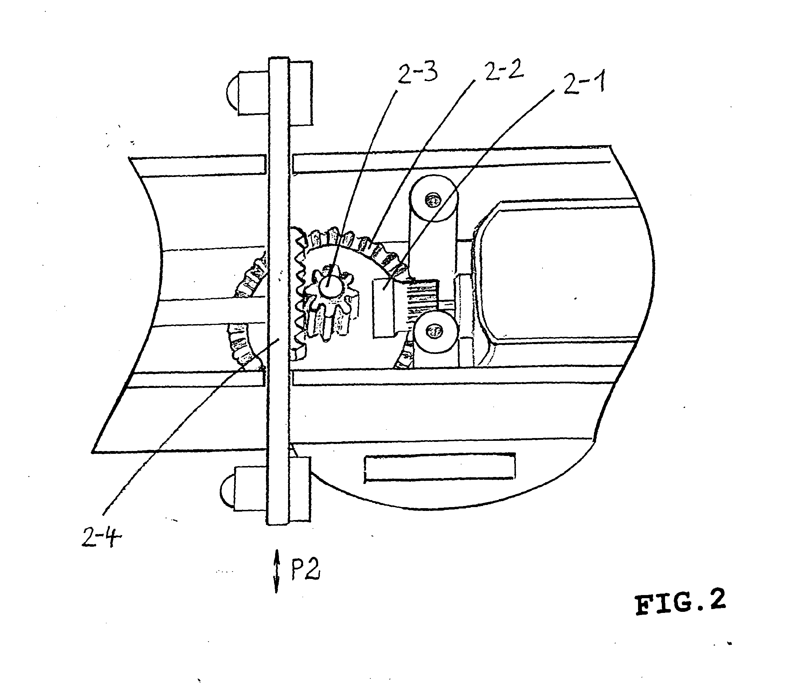

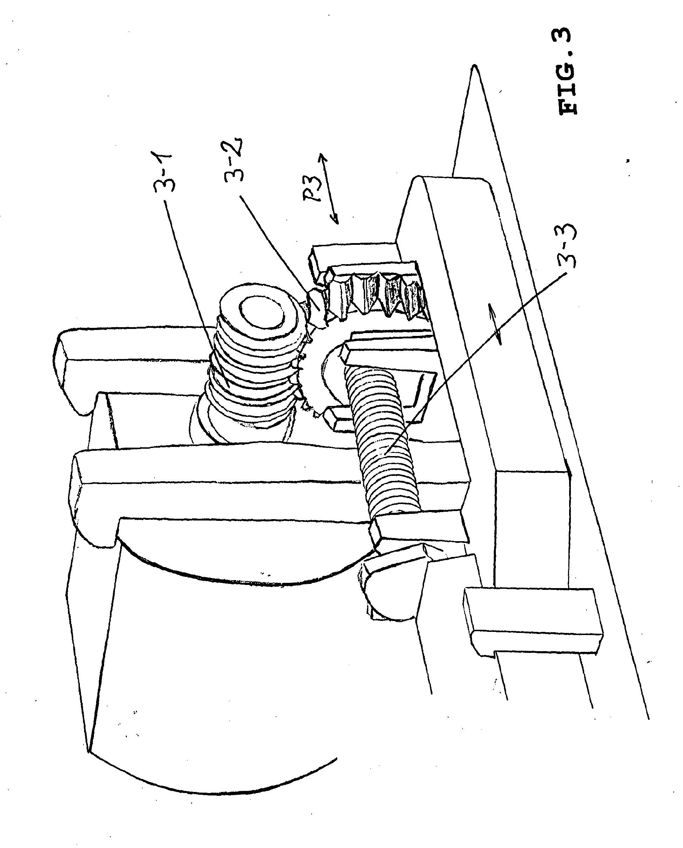

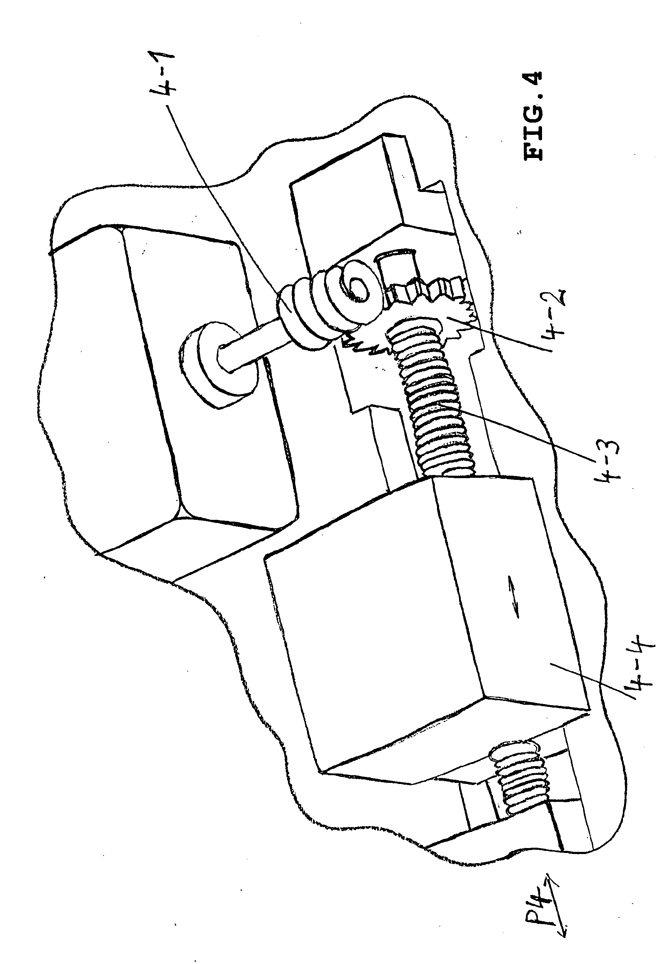

Eine dieser bekannten Baugruppen (Artikel-Nr. 219998-LN ) stammt von der Fa. CONRAD Elektronik (in D-83362 Hirschau). Sie ist auszugsweise in FIG.2 dargestellt:
Auf der Motorachse sitzt ein Zahnrad 2-1, welches einen Zahnradkranz 2-2 treibt. Auf der Achse des Zahnradkranzes sitzt wiederum ein Zahnrad 2-3, welches bei Bewegung einen Schieber 2-4 mit einer Zahnstange translatorisch in Doppelpfeilrichtung P2 bewegt, wodurch die Weichenstellung bewirkt wird.
Diese Baugruppe hat konstruktionsbedingt relativ große Abmessungen ( 68 mm x 24 mm x 25 mm, Einbauvolumen 40,8 cm hoch drei).
Eine andere bekannte Baugruppe der Fa. Tillig Modellbahnen GmbH & Co.KG ( in D- 01855 Sebnitz) mit der Artikelnr. 86110 weist gemäß Darstellung in FIG. 3 folgende Merkmale auf:
   Auf der Motorachse sitzt eine Schnecke 3-1, welche ein Schneckenrad 3-2 (mit einer axialen Bohrung mit Innengewinde) treibt. In dieser Bohrung ist ein Gewindebolzen 3-3 angeordnet, welcher bei Schneckenraddrehung in axialer Doppelpfeil-Richtung P3 translatorisch verschoben wird und in welcher auch - oder parallel dazu- die Bewegung zur Weichenstellung erfolgt. Motorachse und Gewindebolzenachse verlaufen in horizontaler Projektion senkrecht zueiander. Hierdurch ergeben sich ebenfalls relativ große Abmessungen der Baueinheit (65mm x 43mm x 22mm; Einbauvolum 61.5 cm hoch drei).

Eine weitere bekannte Baugruppe der Firma LEMACO SA (CH 1024 Ecublens) hat gemäß FIG. 4 folgende Konstruktionsmerkmale:
Auf der Motorachse sitzt eine Schnecke 4-1, welche ein Schneckenrad 4-2 treibt. Mit dem Schneckenrad ist ein axial ausgerichteter Gewindebolzen 4-3 fest verbunden. Auf diesem Bolzen ist ein Schlitten 4-4 angeordnet, welcher sich bei Schneckenraddrehung translatorisch in Doppelpfeilrichtung P5 bewegt und die Weichenstellung bewirkt.
Motorachse und Gewindebolzenachse verlaufen in horizontaler Projektion senkrecht zueiander. Dies ist wiederum ein Grund für die relativ großen Abmessungen dieser Baueinheit ( 68 mm x 44 mm x 32 mm; Einbauvolumnen 95,7 cm hoch drei).

Es ist Aufgabe der Erfindung, eine Baugruppe vorzusehen, welche ein möglichst hohes Untersetzungsverhältnis bei einer geringen Anzahl verwendeter Bauteile hat.
Es ist weiterhin Aufgabe der Erfindung, eine Baugruppe vorzusehen, welche sich durch eine besondere platzsparende Anordnung ihrer Bauelemente auszeichnet.

Diese Aufgabe der Erfindung wird durch die im kennzeichnenden Teil des Anspruches 1 bzw. 4 aufgeführten Merkmale gelöst. Vorteilhafte Weiterbildungen der Erfindung sind in den übrigen Unteransprüchen gekennzeichnet.

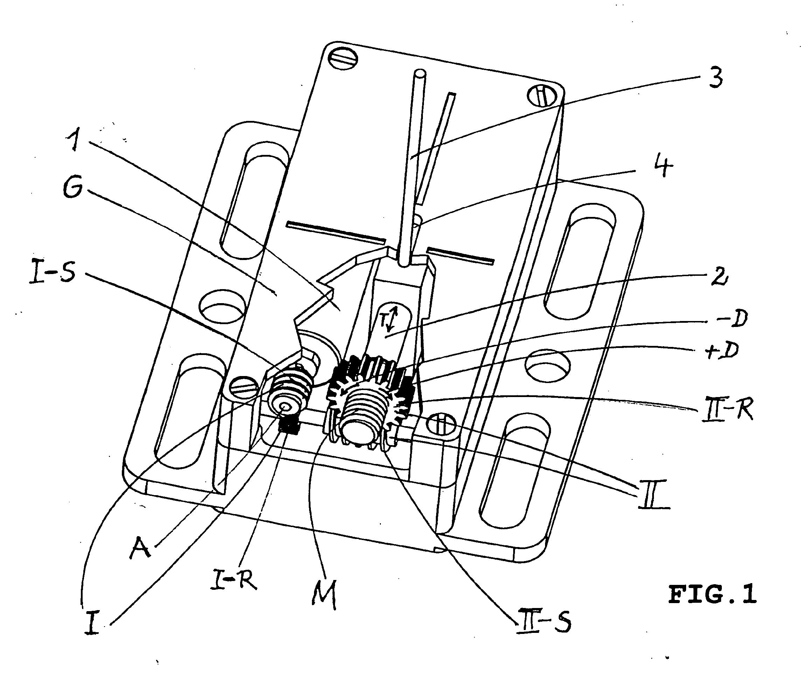

Ein Ausführungsbeispiel der Erfindung ist in FIG. 1 dargestellt und wird im folgenden näher beschrieben.

FIG. 1 zeigt
eine perspektivische Darstellung der erfindungsgemäßen Baugruppe mit Gehäuse;
Die Baugruppe umfaßt einen Motor 1 (der vorzugsweise ein Elektromotor ist), zwei hintereinandergeschaltete Schneckentriebe I und II und ein Stellglied 2 mit einem Steuer-Element 3.
Der Elektomotor 1 hat eine langgestreckte zylindrische Form. Dicht neben ihm an seiner Längsseite ist ein stabähnlicher translatorisch in Doppel-Pfeilrichtung T hin und her bewegbares Stellglied 2 angeordnet. Das Stellglied 2 ist mit einem als Stift ausgebildeten Steuer-Element 3 verbunden, welcher ebenfalls - wie das Stellglied 2 - translatorisch hin und her bewegbar ist. Der Elektromotor 1 wird im Start / Stop - Modus und im Rechts- und Linkslauf betrieben. Seine Motor-Achse A ist mit zwei hintereinandergeschalteten Schneckengetrieben I und II verbunden.

Das erste Schneckengetriebe I umfaßt eine erste Schnecke I-S und ein erstes Schneckenrad I-R, das zweite Schneckengetriebe II umfaßt eine zweite Schnecke II-S und ein zweites Schneckenrad II-R.
Die erste Schnecke I-S ist direkt auf der Motorachse A angeordnet, die zweite Schecke II-S direkt auf der Achse des ersten Schneckenrades I-R. Die gedachten geometrischen Achsen der Schnecken verlaufen in horizontaler Projektion senkrecht zueinander.
Das erste Schneckenrad I-R wird von der ersten Schnecke I-S getrieben. Die zweite Schnecke II-S ( sie ist auf der Achse des ersten Schneckenrades I-R angeordnet) treibt bei Drehung das zweite Schneckenrad II-R in Drehrichtung +D bzw. -D.

Das zweite Schneckenrad II-R weist eine axiale Bohrung mit Innengewinde auf, welches mit dem Gewindeabschnitt M des stiftartigen Stellgliedes 2 verbunden ist.
Die gedachte (nicht dargestellte) geometrische Achse des Stellgliedes 2 fällt mit der gedachten geometrischen Achse des zweiten Schneckenrades II-R zusammen.
Das stiftartige Stellglied 2 ist verdrehfest gelagert- bei Drehung des zweiten Schneckenrades II-R bewegt sich das Stellglied 2 gewindegetrieben translatorisch in Doppelpfeil-Richtung T der Schneckenradachse.
Das zweite Schneckenrad II-R ist in Achsrichtung verschiebefest gelagert - es kann sich also nicht in Richtung seiner Achse verschieben, sondern nur um seine Achse drehen.
Eine Verdrehung des stiftartigen Stellgliedes 2 wird durch den in dem Schlitz 4 geführten Steuerstift verhindert ( der Schlitz 4 verläuft parallel zur Achse des Schneckenrades II-R.
Durch die Anordnung des Stellgliedes 2 direkt neben dem Motor (in Verbindung mit den beiden Schneckentrieben) ergibt sich eine besonders platzsparende Anordnung der Baugruppen-Elemente. Eine solche Baugruppe mit dem sie umschließenden Gehäuse kann deshalb besonders klein ausgeführt werden; dies ist besonders für sehr kleine Spurweiten elektrischer Modelleisenbahnen vorteilhaft.
Die relativ kleinen Abmessungen dieser erfindungsgemäßern Baugruppe bei gefertigten Mustern (z.B. 36 mm x 17mm x 12 mm; Einbauvolumnen 7,3 cm hoch drei) gestatten es sogar , diese Baugruppen in übliche Tragplatten ( 10-12 mm stark) für den Unterbau von Modelleisenbahnanlagen zu integrieren.

Die Gewindeverbindung des zweiten Schneckenrades II-R mit dem stiftähnlichen Stellglied 2 kann auch auf andere Art und Weise als in FIG. 1 dargestellt erfolgen:
z.B. dadurch, daß das umlaufende Gewinde im Abschnitt M durch ein Außengewinde-Segment - ähnlich einem Zahnstangen-Abschnittersetzt wird
oder durch eine Gewindeverbindung, bei der ein Gewinde-Achsstummel des Schneckenrades mit dem Innengewinde in einer Achsbohrung eines stiftartigen Stellgliedes zusammenwirkt.

In vorteilhafter Weise wird für die Gewindeverbindung zwischen Schneckenrad und Stellglied ein Trapez-Gewinde gewählt, da dieses bei kleinen Toleranzen am wenigsten Schmutzeinflüssen ausgesetzt ist.
Die Abmessungen (ohne Befestigungs-Flansche) der Baugruppen nach dem Stand der Technik liegen wie ausgewiesen weit über denen der erfindungsgemäßen Baugruppe, dessen Einbauvolumen nur einen Bruchteil der Baugruppen nach dem Stand der Technik umfaßt.
Es sei ausdrücklich darauf hingewiesen, daß sich die erfindungsgemäße Baugruppe nicht nur auf Miniatur-Weichenantriebe für Modelleisenbahnen bezieht, sondern auch auf größere oder noch kleinere Baugruppen, die je nach Größe ihrer Bauelemente für die unterschiedlichsten Anwendungen ( z.B. Mikrotechnik, Haustechnik / Schließsysteme, Automobilindustrie/Zentralverriegelung, Luft- und Raumfahrt/Klappenbetätigung ) eingesetzt werden können.

## Patentansprüche

1. Baugruppe
mit einem Motor für Start/Stop- und Vorwärts/Rückwärtslauf-Betrieb,
und mit einem motorgetriebenen mechanischen Getriebe
zur Umformung der Motor-Drehbewegung in eine translatorische Bewegung,
**dadurch gekennzeichnet,**
**daß** das Getriebe zwei hintereinandergeschaltete SchneckenGetriebe (I und II) mit jeweils einer Schnecke (I-S, II-S) und jeweils einem Schneckenrad (I-R, II-R) umfaßt,
**daß** das Schneckenrad (II-R) des zweiten Schneckengetriebes (II) mit einer gewindegetriebenen Anordnung verbunden ist zur Umformung der Drehbewegung dieses Schneckenrades (II-R) in eine translatorische Bewegung (T) eines Stell-Gliedes (2) in Richtung der Schneckenrad(II-R)-Achse.

2. Anordnung nach Anspruch 1,
**dadurch gekennzeichnet,**
**daß** das Stellglied (2) mit einem Schalt- oder Steuerelement (3) verbunden ist.

3. Anordnung nach Anspruch 1,
**dadurch gekennzeichnet,**
**daß** die Nabe des zweiten Schneckenrades (II-R) ein Innengewinde aufweist,
welches mit einem Außengewinde-Abschnitt (M) des Stellgliedes (2) derart zusammenwirkt, daß bei Drehung des Schneckenrades (II-R) das Stellglied (2) translatorisch in Richtung der Schneckenrad-Achse bewegbar ist.

4. Anordnung nach Anspruch einem der Ansprüche 1 bis 3,
**dadurch gekennzeichnet,**
**daß** auf der Achse (A) des Motors (1) die Schnecke (I-S) des ersten Schneckengetriebes (I) angeordnet ist,
**daß** auf der Achse des Schneckenrades (I-R) des ersten Schneckengetriebes (I) die Schnecke (II-S) des zweiten Schneckengetriebes (II) angeordnet ist,
und **daß** das Stellglied (2) dicht neben dem Motor (1) angeordnet ist, wobei der Bewegungsrichtungsvektor des Stellgliedes (2) und die Motorachse (A) parallel zueinander verlaufen.

5. Anordnung nach einem der Ansprüche 1 bis 4,
**dadurch gekennzeichnet, daß**
der Motor (1) ein Elektromotor ist.

6. Anordnung nach einem der Ansprüche 1 bis 4,
**dadurch gekennzeichnet, daß** das Gewinde für die Gewindeverbindung zwischen dem Schneckenrad (II-2) und dem Stellglied (2) ein Trapez-Gewinde ist.
